# FASCICULE DE BREVET EUROPEEN

(11) **EP 2 435 176 B1**
(45) Date de publication et mention de la délivrance du brevet: **24.07.2013**
(21) Numéro de dépôt: 10728819.3
(22) Date de dépôt: 27.05.2010
(51) Int. Cl.: B01J 8/26, F23C 10/00

(54) **PROCEDE DE TRANSFERT REGLABLE DE SOLIDES AVEC ETANCHEITE GAZEUSE VERS DES ENCEINTES SOUS ATMOSPHERE GAZEUSE DIFFERENTE**
VERFAHREN FÜR DIE EINSTELLBARE GASDICHTE ÜBERTRAGUNG VON FESTSTOFFEN IN KAMMERN MIT UNTERSCHIEDLICHER GASATMOSPHÄRE
METHOD FOR THE ADJUSTABLE GAS-TIGHT TRANSFER OF SOLIDS TO CHAMBERS HAVING A DIFFERENT GAS ATMOSPHERE

(30) Priorité: 27.05.2009 FR 0953467
(43) Date de publication de la demande: 04.04.2012
(73) Titulaire: Morin, Jean-Xavier, 45170 Neuville Aux Bois (FR)
(72) Inventeur: Morin, Jean-Xavier, 45170 Neuville Aux Bois (FR)
(74) Mandataire: Lenne, Laurence
(86) Numéro de dépôt international: PCT/FR2010/051010
(87) Numéro de publication internationale: WO 2010/136719

(56) Documents cités:
- FR-A- 1 098 520
- US-A- 4 999 100
- US-A- 5 264 196

## Description

L'invention concerne un procédé de transfert réglable de solides avec étanchéité gazeuse vers des enceintes sous atmosphère gazeuse différente

Un dispositif d'étanchéité connu entre deux enceintes gazeuses à pression différente mais contenant un gaz de composition similaire est couramment désigné sous le nom de siphon, compte tenu de la similitude hydraulique, et peut être réalisé sous forme d'une gaine discontinue en forme de siphon ou de tube plongeur dans une enceinte fluidisée. La course verticale descendante puis ascendante du siphon fluidisé rempli de solides à haute température constitue la barrière de pression entre les deux enceintes.

Le régime de fluidisation, très turbulent, dans les boucles à lit fluidisé circulant implique des envols de solides fluidisés ce qui exige alors d'installer un dispositif de séparation des gaz et des solides au sommet du réacteur, afin de recycler ces envols de solides dans le réacteur fluidisé. Dès lors, il est nécessaire d'installer un dispositif d'étanchéité de type siphon, sur ce recyclage de solides, entre le bas du réacteur à haute pression où s'effectue la réinjection des solides recyclés et le bas du dispositif de séparation des gaz et des solides.

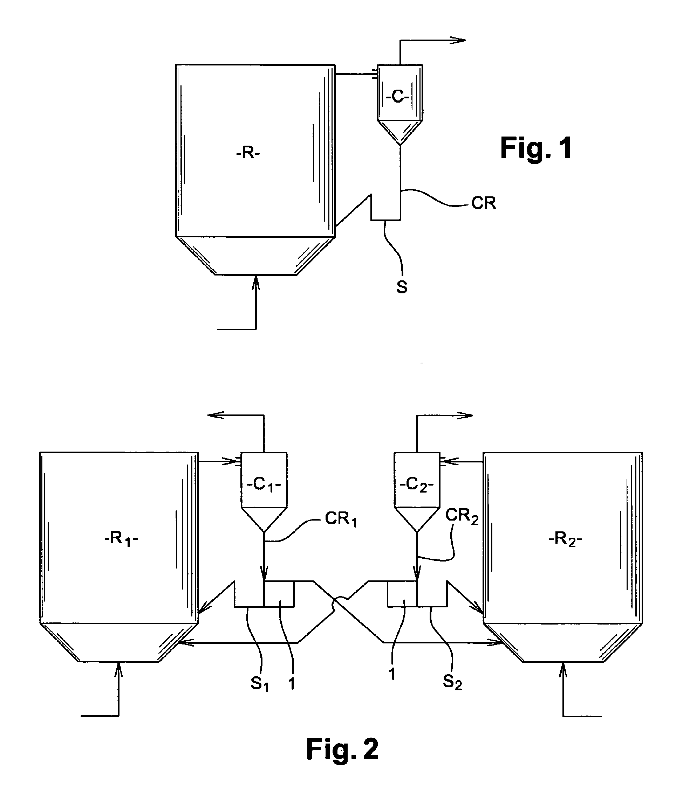

A titre d'exemple, la figure 1 illustre une application classique d'un tel siphon. Une boucle à lit fluidisé comporte un réacteur R connecté en partie haute à un séparateur cyclone C dont la sortie des solides présente une conduite de retour CR destinée à transférer ces solides vers le bas du réacteur R. Cette conduite de retour R est équipée d'un siphon d'étanchéité S assurant l'étanchéité gazeuse entre le réacteur et le séparateur cyclone.

S'il assure une étanchéité gazeuse, un tel siphon n'assure aucun réglage du transfert des solides.

Or les boucles à lit fluidisé à haute température de l'ordre de 800 à 1100°C constituent une technique utilisée pour la conversion thermochimique des minerais et des combustibles d'origine fossile et non fossile. De tels cycles thermochimiques comportent deux boucles à lit fluidisé dont les réacteurs sont interconnectés. Il est essentiel pour le bon fonctionnement des réacteurs de pouvoir fonctionner dans une plage étroite de température, ce qui requiert des moyens de réglage de la température de réaction et donc du débit de solides introduit dans le réacteur.

Dans ces technologies avancées de lit fluidisé, appliquées à la capture du dioxyde de carbone mais aussi à la production de gaz de synthèse ou d'hydrogène, émis notamment par les installations de production d'énergie, qui doivent pouvoir intégrer un dispositif capable à la fois de constituer une étanchéité entre deux enceintes contenant deux gaz différents à des pressions différentes, tout en assurant le transit de flux de solides à haute température entre les deux enceintes sachant que le flux de solides vers chaque enceinte doit pouvoir être contrôlé pour des besoins de procédé et des besoins d'échange de chaleur, il est essentiel d'éviter toute communication de gaz entre les deux enceintes sous peine de provoquer une mise en contact indésirable, par exemple entre un oxydant et un combustible.

Il existe des dispositifs de réglage du débit de solides de type vanne en L, qui permettent pour de faibles débits de solides, de contrôler ce débit pour des besoins de procédé, ou des vannes guillotine ou de type pointeau pour contrôler un débit de solides entre deux enceintes à des pressions différentes. Mais ces vannes ne sont pas étanches aux gaz et nécessite une installation spécifique sur les conduites d'interconnexion. Ces vannes présentent par ailleurs des encombrements importants, des maintenances significatives et enfin peuvent présenter des bouchages par des solides.

Par ailleurs, il est connu du document de brevet US 5 264 196 de réaliser un réacteur à lit fluidisé de type multi-chambres constitué d'une série de chambres fluidisées connectées les unes aux autres alternativement de façon sous-verse et sur-verse au moyen de parois de séparation. Si cet agencement de connexion sous-verse et sur-verse, à la façon d'un siphon, assure une étanchéité entre les chambres, il n'est pas recherché de contrôler le transfert des solides d'une chambre à l'autre et les gaz sont évacués au moyen d'un séparateur des solides et des gaz contenu dans les chambres.

L'invention résout ce problème au moyen d'un procédé et d'un dispositif capable à la fois de constituer une étanchéité entre deux enceintes contenant deux gaz différents à une pression différente, et de transférer un flux de solides à haute température vers les deux enceintes de façon contrôlée de façon non mécanique pour des besoins de procédé et des besoins d'échange de chaleur.

Pour ce faire, l'invention propose un procédé de transfert réglable de solides avec étanchéité gazeuse, consistant à transférer les solides dans une série d'au moins quatre chambres fluidisées au niveau de leur paroi inférieure ou sole au moyen d'un gaz de fluidisation et connectées les unes aux autres alternativement de façon sous-verse et sur-verse au moyen de parois de séparation, caractérisé en un réglage de la pression d'un gaz dit de réglage remplissant l'espace entre les solides et la paroi supérieure ou plafond des deuxième et troisième chambres.

L'invention concerne également un dispositif de transfert réglable de solides avec étanchéité gazeuse, pour la mise en oeuvre de ce procédé, caractérisé en ce que la paroi supérieure ou plafond commun des deuxième et troisième chambres est fermée et pourvue d'une conduite de réglage du débit de gaz.

L'invention concerne un premier agencement de transfert réglable de solides avec étanchéité gazeuse vers deux enceintes contenant un gaz différent à une pression différente, caractérisé en ce qu'il comporte un tel dispositif et un siphon d'étanchéité gazeuse connecté à ladite première chambre.

L'invention concerne enfin un second agencement de transfert réglable de solides avec étanchéité gazeuse vers deux enceintes contenant un gaz différent à une pression différente, caractérisé en ce qu'il comporte deux tels dispositifs, ladite première chambre de ces deux dispositifs étant commune.

L'invention est décrite ci-après plus en détail à l'aide de figures représentant des modes de réalisation préférés de l'invention.
La figure 1 est une vue schématique d'une boucle à lit fluidisé circulant connue.
La figure 2 est une vue schématique d'une installation à cycle thermochimique constituée de deux boucles à lit fluidisé circulant interconnectées et équipée d'un dispositif conforme à l'invention.
La figure 3 est une vue en coupe verticale d'un agencement de transfert réglable de solides avec étanchéité gazeuse selon un premier mode de réalisation conforme à l'invention.
Les figures 4 à 6 sont des vues en coupe horizontale d'exemples de disposition d'un tel agencement.
La figure 7 est une vue en coupe verticale d'un agencement de transfert réglable de solides avec étanchéité gazeuse selon un second mode de réalisation conforme à l'invention.
Les figures 8 et 9 sont des vues en coupe horizontale d'exemples de disposition d'un tel agencement.

Comme illustré sur la figure 2, le dispositif 1 conforme à l'invention trouve de préférence son application dans une installation à cycle thermochimique constituée de deux boucles à lit fluidisé circulant interconnectées, telle qu'illustrée sur la figure 2.

Chaque boucle à lit fluidisé comporte un réacteur R₁, R₂ connecté en partie haute à un séparateur cyclone C₁, C₂ dont la sortie des solides présente une conduite de retour CR₁, CR₂ destinée à transférer ces solides vers le bas du réacteur R₁, R₂. Cette conduite de retour R₁, R₂ est équipée d'un siphon d'étanchéité S₁, S₂ assurant l'étanchéité gazeuse entre le réacteur et le séparateur cyclone.

A chaque siphon S₁, S₂ est associé, du côté de l'interconnexion des réacteurs R₁, R₂, un dispositif de transfert réglable de solides avec étanchéité gazeuse 1, qui va être maintenant décrit.

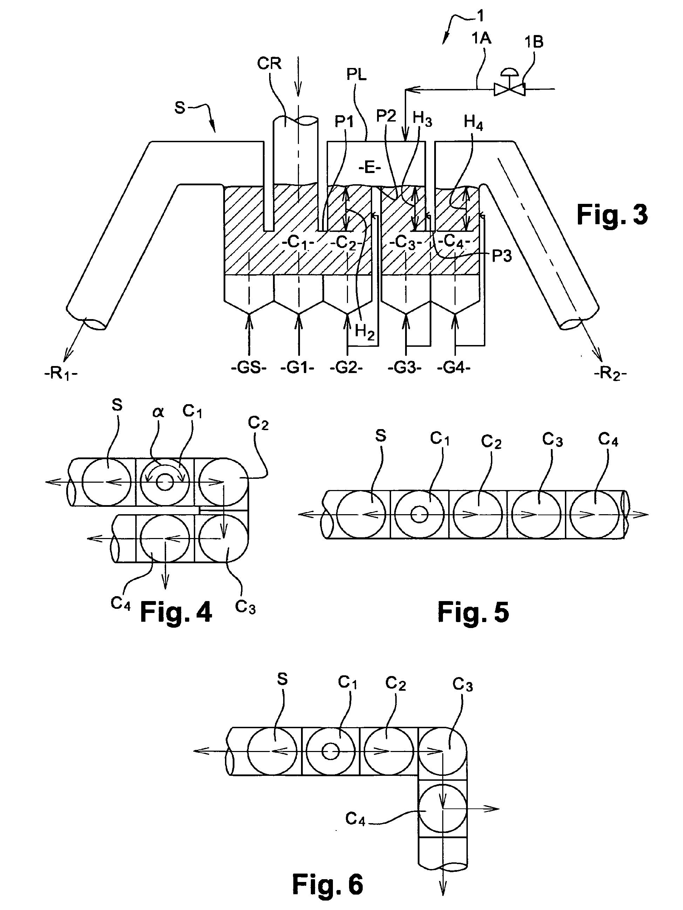

Ce dispositif 1 est représenté sur la figure 3, avec le siphon S associé.

Le procédé de transfert réglable de solides avec étanchéité gazeuse, conforme à l'invention, consiste à transférer les solides dans une série d'au moins quatre chambres C₁, C₂, C₃, C₄ fluidisées au niveau de leur paroi inférieure ou sole au moyen d'un gaz de fluidisation injecté dans une boîte à vent propre à chaque chambre et connectées les unes aux autres alternativement de façon sous-verse et sur-verse au moyen de parois de séparation P₁, P₂, P₃.

Selon l'application à un cycle thermochimique illustré sur la figure 2, la première chambre C₁ assure l'entrée gravitaire des solides au bas d'une conduite de retour CR et la dernière chambre C₄ assure la sortie des solides vers le bas d'un réacteur R₂, par un agencement en sur-verse.

La paroi supérieure ou plafond commun PL des deuxième et troisième chambres C₂, C₃ est fermée et pourvue d'une conduite de réglage du débit de gaz 1A pourvue d'une vanne 1B, destinée au réglage de la pression d'un gaz dit de réglage remplissant l'espace E entre les solides et la paroi supérieure ou plafond des deuxième et troisième chambres.

Les chambres C₁, C₂, C₃, C₄ sont de section transversale constante et de préférence identique, circulaire, carrée ou rectangulaire.

Le gaz de fluidisation G₁, G₂, G₃, G₄ des chambres est de préférence à débit réglable pour ajuster la porosité des couches fluidisées et donc la perte de charge associée, les granulométries en circulation étant en général hétérogènes et ayant besoin périodiquement d'être re-mélangées au moyen des ajustements de vitesses de fluidisation. Ce réglage est ajusté afin d'assurer un écoulement des solides et des gaz, le gaz de fluidisation s'écoulant avec les solides en aval de chaque chambre.

Afin d'éviter tout problème d'incompatibilité entre eux et avec le gaz de fluidisation du réacteur R2, ces gaz de fluidisation G1, G2, G3, G4 ainsi que celui GS du siphon S sont de préférence de la vapeur d'eau et/ou du dioxyde de carbone.

En ce qui concerne les deuxième, troisième et quatrième chambres C₂, C₃, C₄, le gaz de fluidisation est injecté sous la sole des chambres et également à environ mi-hauteur des hauteurs H₂, H₃ et H₄ des couches de solides, hors leur passage en sous-verse, dans ces chambres C₂, C₃, C₄. Ceci participe au contrôle de débit en abaissant artificiellement la contre-pression de la couche de solides vers le réacteur R₂, au moyen d'un profil vertical de vitesse de fluidisation.

Représentées égales sur la figure 3, de façon générale, la hauteur H₂ dans la deuxième chambre C₂ est supérieure ou égale à la hauteur H₃ dans la troisième chambre C₃ qui est supérieure ou égale à la hauteur H₄ dans la quatrième chambre C₄.

Le gaz dit de réglage remplissant l'espace E, quant à lui est de préférence de la vapeur d'eau et/ou du dioxyde de carbone, inertes vis-à-vis d'un procédé de capture de dioxyde de carbone ou d'un procédé de production de gaz de synthèse, et son débit positif ou négatif est ajusté afin d'assurer une contre-pression déterminée sur la couche de solides, afin d'en régler la hauteur et donc d'assurer un réglage de transfert pneumatique des solides.

Selon ce premier mode de réalisation, l'agencement complet de transfert réglable de solides avec étanchéité gazeuse entre deux réacteurs ou autres enceintes R₁, R₂ contenant un gaz différent à une pression différente, comporte un tel dispositif 1 et un siphon S d'étanchéité gazeuse connecté à la première chambre C₁ et assurant la sortie des solides, par exemple vers le bas d'un réacteur R₂, par un agencement en sur-verse.

Les parois P₁, P₂, P₃ sont de hauteur adaptée selon les conditions primaires de pression dans ces réacteurs R₁, R₂.

Les figures 4 à 6 sont des vues en coupe horizontale d'exemples de disposition d'un tel agencement.

Les quatre chambres C₁, C₂, C₃, C₄ ici de section circulaire peuvent être disposés selon un carré avec le siphon S associé, comme illustré sur la figure 4.

Les quatre chambres C₁, C₂, C₃, C₄ ici de section circulaire peuvent être disposés de façon alignée avec le siphon S associé, comme illustré sur la figure 5.

Les quatre chambres C₁, C₂, C₃, C₄ ici de section circulaire peuvent être disposés selon une forme de L avec le siphon S associé, comme illustré sur la figure 6.

Selon les nécessités d'encombrement, toute disposition relative entre le siphon S et les chambres C₁, C₂, C₃, C₄ adjacentes peut être envisagée. A titre d'exemple, l'angle α représenté sur la figure 4, égal à 180 degrés et correspondant à un alignement du siphon et des chambres C₁ et C₂, peut être différent.

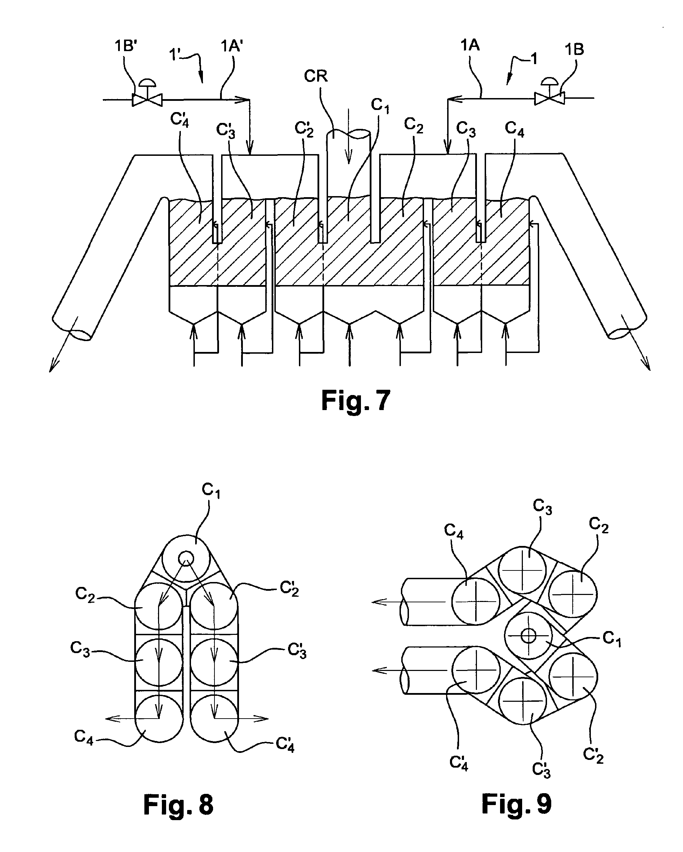

Selon un second mode de réalisation représenté sur la figure 7 l'agencement complet de transfert réglable de solides avec étanchéité gazeuse entre deux réacteurs ou autres enceintes R₁, R₂ contenant un gaz différent à une pression différente, comporte deux tels dispositifs 1, 1' symétriques, la première chambre C₁ de ces deux dispositifs étant commune.

Cet agencement comporte alors sept chambres C₁, C₂, C₃, C₄, C'₂, C'₃, C'₄ et permet de réaliser un double réglage du transfert de solides avec étanchéité gazeuse, au moyen des deux conduites de réglage du débit de gaz 1A, 1'A pourvue d'une vanne 1B, 1'B.

Les figures 8 et 9 sont des vues en coupe horizontale d'exemples de disposition particulièrement compacte d'un tel agencement.

Les sept chambres C₁, C₂, C₃, C₄, C'₂, C'₃, C'₄ ici de section circulaire peuvent être disposés selon une forme de Vé, comme illustré sur la figure 8.

Les sept chambres C₁, C₂, C₃, C₄ C'₂, C'₃, C'₄ ici de section circulaire peuvent être disposés selon une forme hexagonale, comme illustré sur la figure 9.

Bien que les modes de réalisation décrits ci-dessus concernent un agencement de transfert réglable de solides avec étanchéité gazeuse vers deux enceintes (R₁, R₂), selon le procédé conforme à l'invention, il est possible de réaliser un tel agencement vers plus de deux enceintes, en adaptant la section horizontale des chambres en conséquence, par exemple en utilisant des sections horizontales semi-annulaires.

## Revendications

1. Procédé de transfert réglable de solides avec étanchéité gazeuse, consistant à transférer les solides dans une série d'au moins quatre chambres (C₁, C₂, C₃, C₄) fluidisées au niveau de leur paroi inférieure ou sole au moyen d'un gaz de fluidisation et connectées les unes aux autres alternativement de façon sous-verse et sur-verse au moyen de parois de séparation (P₁, P₂, P₃), caractérisé en un réglage de la pression d'un gaz dit de réglage remplissant l'espace (E) entre les solides et la paroi supérieure ou plafond des deuxième et troisième chambres (C₂, C₃).

2. Procédé selon la revendication 1, **caractérisé en ce que** la première chambre (C₁) assure l'entrée gravitaire des solides et la dernière chambre (C₄) assure la sortie des solides.

3. Procédé selon la revendication précédente, **caractérisé en ce que** ladite sortie des solides est effectuée en sur-verse.

4. Procédé selon l'une des revendications précédentes, **caractérisé en ce que** ledit gaz de fluidisation est également injecté à environ mi-hauteur des hauteurs (H₂, H₃ et H₄) des solides, hors leur passage en sous-verse, dans les deuxième, troisième et quatrième chambres (C₂, C₃, C₄).

5. Procédé selon l'une des revendications précédentes, **caractérisé en ce que** ledit gaz de réglage est de la vapeur d'eau et/ou du dioxyde de carbone.

6. Procédé selon l'une des revendications précédentes, **caractérisé en ce que** lesdits gaz de fluidisation sont de la vapeur d'eau et/ou du dioxyde de carbone.

7. Dispositif de transfert réglable de solides avec étanchéité gazeuse, pour la mise en oeuvre du procédé selon l'une des revendications précédentes, **caractérisé en ce que** la paroi supérieure ou plafond commun des deuxième et troisième chambres (C₂, C₃) est fermée et pourvue d'une conduite (1A) de réglage du débit de gaz.

8. Dispositif selon la revendication précédente, **caractérisé en ce que** lesdites chambres (C₁, C₂, C₃, C₄) sont de section transversale constante.

9. Agencement de transfert réglable de solides avec étanchéité gazeuse vers deux enceintes (R₁, R₂) contenant un gaz différent à une pression différente, **caractérisé en ce qu'**il comporte un dispositif (1) selon la revendication 7 ou 8 et un siphon d'étanchéité gazeuse (S) connecté à ladite première chambre (C₁).

10. Agencement de transfert réglable de solides avec étanchéité gazeuse vers deux enceintes (R₁, R₂) contenant un gaz différent à une pression différente, **caractérisé en ce qu'**il comporte deux dispositifs (1, 1') selon la revendication 7 ou 8, ladite première chambre (C₁) de ces deux dispositifs étant commune.

## Patentansprüche

1. Verfahren für die einstellbare gasdichte Übertragung von Feststoffen, das darin besteht, die Feststoffe in eine Reihe von mindestens vier Kammern (C₁, C₂, C₃, C₄) zu übertragen, die auf Ebene ihrer unteren Wand oder ihres Bodens mittels eines Fluidisierungsgases fluidisiert sind und miteinander mittels Trennwänden (P₁, P₂, P₃) abwechselnd im Unterlauf- und Überlauf-Modus verbunden sind, das durch eine Einstellung des Drucks eines Einstellungsgases gekennzeichnet ist, das den Raum (E) zwischen den Feststoffen und der oberen Wand oder Decke der zweiten und dritten Kammer (C₂, C₃) füllt.

2. Verfahren nach Anspruch 1, **dadurch gekennzeichnet, dass** die erste Kammer (C₁) den Schwerkrafteintritt der Feststoffe sicherstellt und die letzte Kammer (C₄) den Ausgang der Feststoffe sicherstellt.

3. Verfahren nach vorangehendem Anspruch, **dadurch gekennzeichnet, dass** der Ausgang der Feststoffe durch Überlauf erfolgt.

4. Verfahren nach einem der vorangehenden Ansprüche, **dadurch gekennzeichnet, dass** das Fluidisierungsgas auch auf halber Höhe der Höhen (H₂, H₃ und H₄) der Feststoffe, außerhalb ihrer Übertragung im Unterlauf, in die zweite, dritte und vierte Kammer (C₂, C₃, C₄) eingepresst wird.

5. Verfahren nach einem der vorangehenden Ansprüche, **dadurch gekennzeichnet, dass** das Einstellungsgas Wasserdampf und/oder Kohlendioxid ist.

6. Verfahren nach einem der vorangehenden Ansprüche, **dadurch gekennzeichnet, dass** die Fluidisierungsgase Wasserdampf und/oder Kohlendioxid sind.

7. Vorrichtung für die einstellbare gasdichte Übertragung von Feststoffen zur Umsetzung des Verfahrens nach einem der vorangehenden Ansprüche, **dadurch gekennzeichnet, dass** die obere Wand oder gemeinsame Decke der zweiten und dritten Kammer (C₂, C₃) geschlossen und mit einer Einstellungsleitung (1A) des Gasdurchsatzes ausgestattet ist.

8. Vorrichtung nach vorangehendem Anspruch, **dadurch gekennzeichnet, dass** die Kammern (C₁, C₂, C₃, C₄) einen konstanten Querschnitt haben.

9. Anordnung für die einstellbare gasdichte Übertragung von Feststoffen in zwei Kammern (R₁, R₂), die ein unterschiedliches Gas mit einem unterschiedlichen Druck enthalten, **dadurch gekennzeichnet, dass** sie eine Vorrichtung (1) nach Anspruch 7 oder 8 aufweist und einen gasdichten Siphon (S), der mit der ersten Kammer (C₁) verbunden ist.

10. Anordnung für die einstellbare gasdichte Übertragung von Feststoffen in zwei Kammern (R₁, R₂), die ein unterschiedliches Gas mit einem unterschiedlichen Druck enthalten, **dadurch gekennzeichnet, dass** sie zwei Vorrichtungen (1, 1') nach Anspruch 7 oder 8 aufweist, wobei die erste Kammer (C₁) dieser beiden Vorrichtungen gemeinsam ist.

## Claims

1. An adjustable method for transfer of solids with a gas seal, consisting of transferring solids in a series of at least four chambers (C₁, C₂, C₃, C₄) fluidized at their lower wall or sole by means of a fluidization gas and connected to each other alternatively in an overflow and underflow fashion by means of separation walls (P₁, P₂, P₃), **characterized by** an adjustment of the pressure of a so-called adjustment gas filling the space (E) between the solids and the upper wall or ceiling of the second and third chambers (C₂, C₃).

2. The method according to claim 1, **characterized in that** the first chamber (C₁) ensures entry by gravity of the solids and the last chamber (C₄) ensures exit of the solids.

3. The method according to the preceding claim, **characterized in that** said exit of the solids is carried out as an overflow.

4. The method according to one of the preceding claims, **characterized in that** said fluidization gas is also injected at about half-height of the heights (H₂, H₃ and H₄) of the solids, outside their underflow passage, into the second, third and fourth chambers (C₂, C₃, C₄).

5. The method according to one of the preceding claims, **characterized in that** said adjustment gas is steam and/or carbon dioxide.

6. The method according to one of the preceding claims, **characterized in that** said fluidization gases are steam and/or carbon dioxide.

7. An adjustable device for transfer of solids with a gas seal for applying the method according to one of the preceding claims, **characterized in that** the upper wall or common ceiling of the second and third chambers (C₂, C₃) is closed and provided with a conduit (A) for adjusting the gas flow rate.

8. The device according to the preceding claim, **characterized in that** said chambers (C₁, C₂, C₃, C₄) are of constant cross-section.

9. An adjustable layout for transfer of solids with a gas seal towards two enclosures (R₁, R₂) containing a different gas at a different pressure, **characterized in that** it includes a device (1) according to claim 7 or 8 and a gas seal siphon (5) connected to said first chamber (C₁).

10. An adjustable layout for transfer of solids with a gas seal towards two enclosures (R₁, R₂) containing a different gas at a different pressure, **characterized in that** it includes two devices (1, 1') according to claim 7 or 8, said first chamber (C₁) of both of these devices being common.
